# EUROPEAN PATENT APPLICATION

(11) **EP 1 713 255 A1**
(43) Date of publication of application: **18.10.2006**
(21) Application number: 05300273.9
(22) Date of filing: 11.04.2005
(51) Int. Cl.: H04N 5/232

(54) **Intercom system for multiple cameras**

(71) Applicant: Thomson Licensing, 92100 Boulogne-Billancourt (FR)
(72) Inventor: Hommel, John, 4681 BM, Nieuw Vossemeer (NL); van Geel, Martinus Wilhelmus Cornelis, 4931 VK, Geertruidenburg (NL); van den Herik, Florus Bernardus, 4907 NR, Oosterhout (NL)
(74) Representative: Rossmanith, Manfred

(57) **Abstract**

An intercom system for cameras used in broadcast and/or recording allows for establishing flexible voice communication between individual or multiple camera operators as well as a director. The intercom system preferably uses IP protocol based communication channels, such as VOIP. Each camera or other component is assigned a unique and unambiguous network identifier. In this way, multiple connections between individual camera operators may be established in parallel, without interfering with each other. The swiching matrix may be provided in a camera or in a dedicated networking device.

## Description

The present invention relates to an intercom system for multiple cameras that are connected to a camera control unit, or CCU.

Multiple professional cameras on a set are typically connected to a CCU from where a director can access the audio and/or video content of every single camera. In production environments, like studios and other sets that are covered using outside broadcast vans, routers are used to establish audio and/or video connections from the CCUs to a production switcher. To this end, respective first transmission channels are provided for transmitting the individual audio and/or video signals from the cameras to the CCU and to the router. Some CCUs offer intercom systems, like dedicated bi-directional voice channels, for communicating with the camera operators or a technical team. By means of the dedicated voice channel a director gives instructions to the camera operator, e.g. based on a script of the production and on the images he sees on preview monitors in a production room.

Today's cameras and CCUs feature control of camera parameters and exchange of camera status information via a network connection such as LAN or Ethernet. The control is effected from a master control panel. A commonly known communication protocol is the TCP/IP protocol, or Transfer Control Protocol/Internet Protocol. These systems are also known as C2IP, an acronym for 'Camera Control over IP'. To this end each camera has an unambiguous IP address, or network identifier, in the system, which can be addressed by the director to individually control the addressed camera.

Sometimes in a live production situations occur which are not in the script and which the director did not foresee. In this case the camera operators must quickly react to the situation in order to cover the event in a proper way. This could, e.g. include communication of the camera operators with each other, and instructing themselves how to cover the live event. However, conventional intercom systems used in broadcast cameras do not provide an isolated intercom channel between individual or a group of camera operators.

It is, therefore, desirable to provide improved communication means for multiple cameras on a set.

The invention solves the problem of limited communication facilities amongst the operators of the cameras and an external operator or director in the system by using the physical connection provided with the CCU for camera control and exchange of camera status information, e.g. a LAN-connection, to additionally exchange voice data from the operators. This feature may be implemented by means of VOIP, or Voice Over IP, telephony channels from the CCU to the cameramen and vice versa. In general the invention solves the problem of limited communication facilities by providing a second transmission channel for establishing a voice network that allows addressing individual network devices individually or in groups by using unique network identifiers for every single network device. The inventive system thus allows for selectively exchanging voice information between individual camera operators and/or an external operator.

The cameras and all other devices such as, e.g. the CCUs, identify themselves in the network as individual network devices, each having an unambiguous network identifier. The cameras and the other network devices, e.g. the CCUs, store the information to which other network devices they are connected. This allows for quick re-establishment of an interrupted communication link, e.g. when the system is installed in a new set location.

Each individual network device can arbitrarily address at least one other network device to exchange voice information between the operators of the respective network devices. In this way it is possible to establish a communication link, which allows two or more operators of respective devices to communicate without interfering with other operators that are presently not party to the communication.

The IP protocol and thus the VOIP system allows for point-to-point connections, broadcast and party-line connections. Point-to-point connections allow for communicating between selected individual network devices. Broadcast connections allow for one network device to communicate to all other network devices of the same subnet simultaneously. Party-line connections, however, allow for multiple individual network devices to communicate to each other by opting-in to a group, or party. In this way it is possible for a group of camera operators to communicate with each other to better adapt to the situation on the set without interfering with the other camera operators that have currently not opted-in to the group, and without blocking other communication channels. In one embodiment, the party-line feature further always allows for the director to address any one or all camera operators in an 'override'-mode, independent of whether a camera operator is currently participating in a party-line communication or not. The invention advantageously improves communication on the set without adding physical connections such as cables.

Any packet based or switched communication protocol that allows for more than two participants to communicate with each other may be used to establish the voice communication between the operators in the system.

Further, the physical connection that is used to transport the camera control data, e.g. the LAN connection, may also be implemented as a wireless connection. Wireless connections are known in the art, e.g. as WLAN, an acronym for wireless LAN, and Bluetooth, and are, therefore, not explained in detail.

It is to be noted that a single physical connection may be provided to accommodate all transmission and communication channels from the cameras to the CCUs and the router. The term transmission channel in the scope of the invention is not limited to dedicated physical connections for every transmission channel, but merely refers to the individual transmission of different data or signals. It is thus possible to use one single physical connection for transmitting any one or combination of audio, video, camera control and status, as well as the voice communication between the operators.

The invention also refers to a camera for use in the system as explained above, as well as a camera control unit, or CCU, for use in the above mentioned system.

The invention will be described in the following with reference to the drawing. In the drawing,
- Fig.1: shows a diagrammatic view of a known camera communication system;
- Fig.2: shows a diagrammatic view of camera communication system according to the invention in a first exemplary operating mode; and
- Fig.3: shows a diagrammatic view of a camera communication system according to the invention in a second exemplary operating mode.

In the drawing, same or similar elements are referenced by the same reference symbols. All connections and endpoints in the diagrams are represented as logical connections to logical equipment.

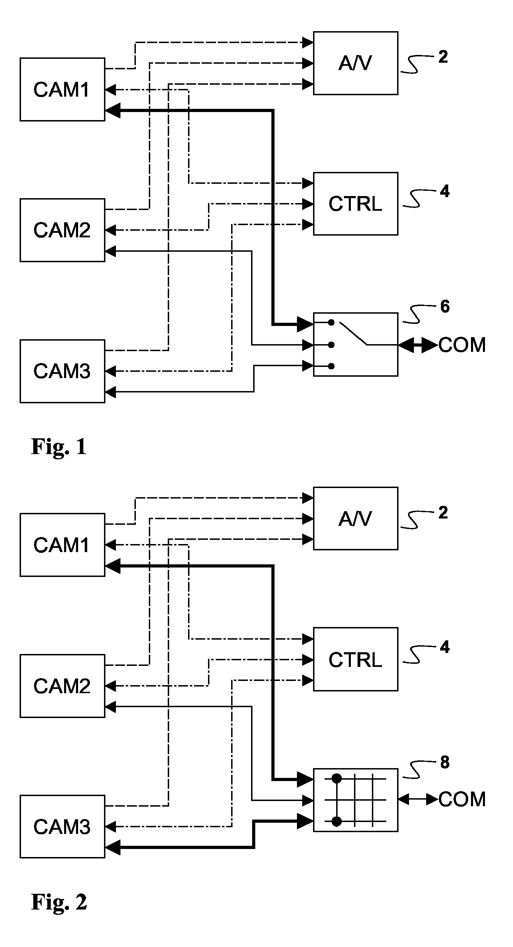

Figure 1 shows a diagrammatic view of the communication channels in a camera communication system as it is known from the prior art. The system includes three cameras CAM1, CAM2 and CAM3. The cameras are connected to an audio/video router, crossbar or switch 2 via respective first transmission channels. The respective first transmission channels are shown in dashed lines. A camera control unit 4 is connected to each camera CAM1 to CAM3 for controlling the cameras and for receiving camera status information. The respective second transmission channels are shown in dash-dotted lines. A communication channel from an operator or a director (not shown) to each of the cameras can be established via a third transmission channel. In the figure, a communication channel from the director (not shown) to camera CAM1 is established indicated by the bold solid line and the position of the selector switch 6. As can easily be seen from the figure, no communication amongst the individual camera operators is possible.

Figure 2 shows a basic diagrammatic view of the communication channels in a camera communication system according to the invention. As shown in figure 1, three cameras CAM1, CAM2 and CAM3 are connected to an audio/video router 2 and a camera control unit 4 via respective first and second transmission channels. According to the invention, the selector switch 6 is replaced with a matrix switch 8, which can be placed physically in one or more cameras, CCUs or another IP-based network device. This advantageously allows for flexibly routing the communication channel amongst all participants in the network. In the figure, the operators of CAM1 and CAM3 have established a communication channel, while the director (not shown) and the operator of CAM2 are not part of the communication. The bold solid lines from and to CAM1 and CAM3, as well as the bold dots in the matrix switch 8, respectively, indicate the communication connection.

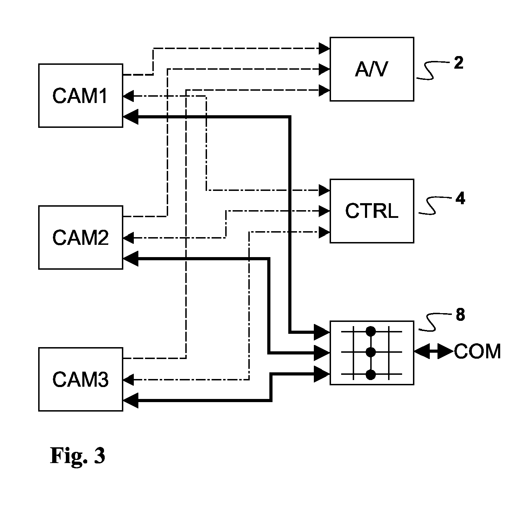

Figure 3 shows the communication channels in a camera communication system according to the invention in another configuration. In this figure the director (not shown) has established a broadcast link to simultaneously communicate to all camera operators, as indicated by the bold solid lines, as well as the respective bold dots in the matrix switch 8.

As mentioned above, the transmission channels for camera control and status information as well as the voice communication channel may be physically the same and only separated by means of corresponding protocols.

## Claims

1. System for recording and/or broadcasting audio and/or video signals, wherein the system includes:
- at least two cameras;
- first transmission channels for transmitting audio and/or video signals;
**characterised in that**
second transmission channels are provided for selectively exchanging voice information between the camera operators and/or an external operator.

2. System according to claim 1, **characterised in that** the second transmission channel is established by a network and that each of the cameras and the camera control units represent network devices that are assigned a network identifier.

3. System according to claim 2, **characterised in that** each individual network device can arbitrarily address at least one other network device to exchange voice information between the operators of the respective network devices.

4. System according to claim 2 or 3, **characterised in that** a selected network device can address all other network devices simultaneously to exchange voice information in a broadcast mode.

5. System according to claim 3 or 4, **characterised in that that** the cameras store the information to which other network devices they are connected via the second transmission channel.

6. System according to claim 5, **characterised in that** the system includes camera control units for each camera, the cameras send the information to which other network devices they are connected via the second transmission channel to the camera control unit upon connection to the camera control unit, and that the camera control units are connected to the network.

7. System according to claim 6, **characterised in that** the camera control units receive the respective audio and/or video signals from the cameras via the respective first transmission channels.

8. System according to any one of the preceding claims, **characterised in that** third transmission channels are provided for exchanging status and control data between each of the at least two cameras and a control panel.

9. System according to any one of the preceding claims **characterised in that** at least two of the first, second and/or third transmission channels are combined in a single physical network, preferably a local area network or Ethernet, WiFi or Bluetooth, and that the communication is established using packet oriented protocols, wherein the second transmission channel preferably uses Voice Over Internet Protocol.

10. Camera for use in a system according to any one of the preceding claims.

11. Camera control unit for use in a system according to any one of the preceding claims 1 to 9.
